# EUROPÄISCHE PATENTSCHRIFT

(11) **EP 1 037 179 B1**
(45) Veröffentlichungstag und Bekanntmachung des Hinweises auf die Patenterteilung: **22.03.2006**
(21) Anmeldenummer: 99124185.2
(22) Anmeldetag: 03.12.1999
(51) Int. Cl.: G07F 11/16, G07F 11/32

(54) **Ausgabeautomat**
Automatic dispenser
Distributeur automatique

(30) Priorität: 17.03.1999 DE 29904863 U
(43) Veröffentlichungstag der Anmeldung: 20.09.2000
(73) Patentinhaber: GEBR. WILLACH GmbH, D-53809 Ruppichteroth (DE)
(72) Erfinder: Willach, Ulrich, 53819 Neunkirchen-Seelscheid 1 (DE); Schmitt, Werner, 53809 Ruppichteroth-Schönenberg (DE)
(74) Vertreter: Selting, Günther

(56) Entgegenhaltungen:
- DE-A- 4 231 941
- US-A- 3 867 628
- US-A- 4 267 942
- US-A- 4 546 901
- US-A- 5 593 267

## Beschreibung

Die Erfindung betrifft einen Ausgabeautomaten zur Ausgabe von Waren, insbesondere in Apotheken zur Entlastung des Pharmazeuten von Such- und Laufvorgängen.

Es ist z.B. aus US-A-5,593,267 bekannt, in Apotheken Ausgabeautomaten einzusetzen, die eine Vielzahl von Waren in einem Regal enthalten. Solche Ausgabeautomaten haben einen Manipulator, der computergesteuert ein gewünschtes Podukt aus dem Regal entnimmt und es an eine Transportvorrichtung übergibt, die das Produkt an eine Ausgabestelle in der Nähe des Handverkaufstischs befördert. Die bekannten Verkaufsautomaten mit angeschlossener Transportvorrichtung haben den Nachteil, daß sie nicht in unmittelbarer Nähe des Fiandverkaufstischs aufgestellt werden können und oft nicht einmal innerhalb des Verkaufsraums. Sie werden vielmehr in einem benachbarten Raum aufgestellt. Die Gegenstände werden dann von der Transportvorrichtung in den Verkaufsraum befördert. Eine Schwierigkeit besteht aber darin, daß die Transportvorrichtung, die unmittelbar an das Regal angrenzt, den Zugang zum Regal erschwert und somit ein Hindernis beim Nachfüllen des Regals darstellt, sowie auch ein Hindernis für die manuelle Entnahme von Ware aus dem Regal bei einem technischen Defekt.

Der Erfindung liegt die Aufgabe zugrunde, einen Ausgabeautomaten zu schaffen, der von der Entnahmeseite her befüllt werden kann, ohne daß hierbei die Transportvorrichtung hinderlich wäre.

Die Lösung dieser Aufgabe erfolgt erfindungsgemäß mit den im Patentanspruch 1 angegebenen Merkmalen.

Bei dem erfindungsgemäßen Ausgabeautomaten ist das Regal mit einer Umsetzvorrichtung versehen, die die entnommenen Gegenstände von der Entnahmeseite auf die Abgabeseite transferiert, an die die Transportvorrichtung angrenzt. Die Abgabeseite ist von der Entnahmeseite des Regals verschieden. Daher kann die Transportvorrichtung dem Regal fest zugeordnet werden, d.h. sie muß nicht abklappbar oder verschiebbar sein. Die Entnahmeseite des Regals ist jederzeit zugänglich, und zwar sowohl für das Auffüllen des Regals als auch' für die manuelle Entnahme von Ware bei einem Defekt.

Ein weiterer Aspekt der Erfindung besteht darin, einen Ausgabeautomaten zu schaffen, bei dem die Transportvorrichtung weitgehend ohne eigene Steuerung und ohne Antriebsmittel auskommt. Hierzu ist vorgesehen, daß die Abgabe der Gegenstände an die Transportvorrichtung auf einer übermannsgroßen Höhe von über 1,80 m vorgesehen ist und daß die Transportvorrichtung eine Rutsche aufweist. Der Manipulator hebt die entnommenen Gegenstände bis zum oberen Ende des Regals an, um den Gegenständen eine große potentielle Energie zu verleihen. Die Gegenstände können anschließend über die Rutsche hinabgleiten, wobei sie aufgrund der dann erreichten kinetischen Energie bis an einen relativ weit entfernten Ausgabeplatz gelangen können. Hierzu sind keinerlei Steuermittel oder Antriebe erforderlich. Es ist jedoch auch möglich, im Zuge der Transportvorrichtung einen Förderer vorzusehen, beispielsweise um türähnliche Durchbrüche zu überbrücken. Grundsätzlich sollte die Transportvorrichtung die Gegenstände auf einer so großen Höhe übernehmen, daß unter ausschließlicher Schwerkraftwirkung auch Türdurchgänge überquert werden können.

Der Ausgabeautomat eignet sich als Verkaufshilfe zur Unterstützung eines Verkäufers. Ein besonderes Anwendungsgebiet ist dasjenige der Apotheken, wo der Ausgabeautomat im Rahmen einer Apothekenausstattung verwendbar ist. In Apotheken muß eine große Vielzahl von Produkten vorrätig gehalten werden. Diese Produkte sind zumeist in rechteckigen Packungen enthalten. Daher eignen sich Apothekenprodukte besonders für eine automatisierte Ausgabe.

Alternativ kann der Ausgabeautomat aber auch für die unmittelbare Kundenbedienung benutzt werden, beispielsweise als geldbetätigter Ausgabeautomat für eine Vielzahl wählbarer Produkte.

Ein Ausgabeautomat, der hier in Rede stehenden Art ist in dem (nicht vorveröffentlichten) Gebrauchsmuster 298 17 528 beschrieben.

Im folgenden werden unter Bezugnahme auf die Zeichnungen Ausführungsbeispiele der Erfindung näher erläutert.

Es zeigen:
- Fig. 1: eine Draufsicht auf einen Teil einer Apotheke, in der der Ausgabeautomat installiert ist,
- Fig. 2: eine Seitenansicht von Fig. 1 aus Richtung des Pfeiles II,
- Fig. 3: in vergrößertem Maßstab einen Vertikalschnitt durch den oberen Teil des Regals und die Transportvorrichtung,
- Fig. 4: eine Draufsicht von Fig. 3, jedoch ohne Gehäusedachwand,
- Fig. 5: eine Ansicht eines Ausgabeautomaten mit Blick auf die Entnahmeseite und zwei angeschlossenen Transportvorrichtungen,
- Fig. 6: eine ähnliche Ansicht wie Fig. 5 bei einer Ausführungsform mit modifizierten Transportvorrichtungen,
- Fig. 7: eine Seitenansicht von Fig. 6 aus Richtung des Pfeiles VII,
- Fig. 8: eine Draufsicht von Fig. 6,
- Fig. 9: einen schematischen Schnitt durch eine weitere Ausführungsform und
- Fig. 10: eine Frontansicht aus Richtung des Pfeiles X von Fig. 9.

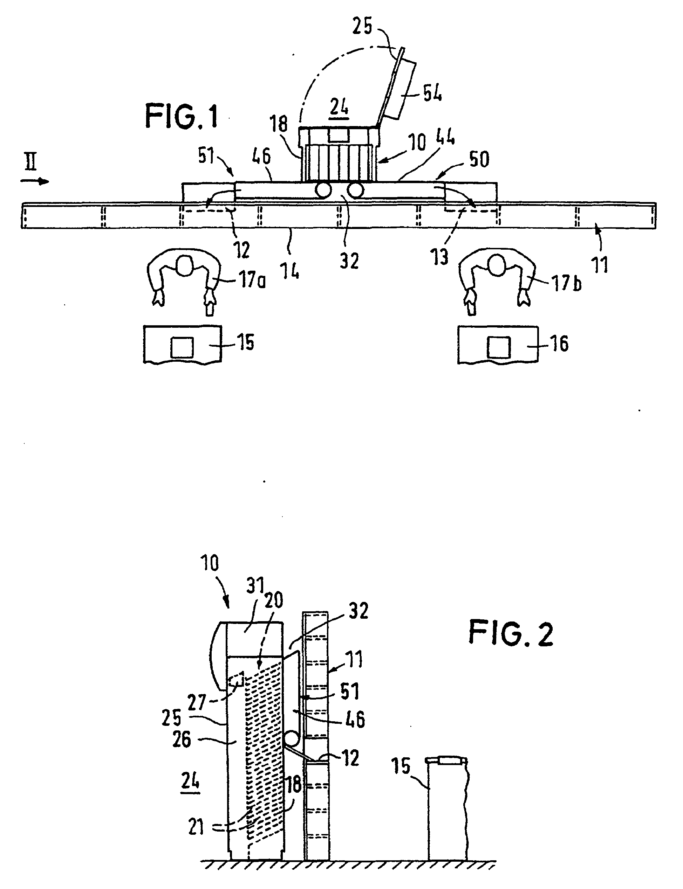

Der Ausgabeautomat 10 der Fign. 1 bis 4 ist hinter einem Verkaufsregal 11 dargestellt, wobei an zwei Stellen des Verkaufsregals Ausgabeplätze 12,13 vorgesehen sind, die von der Vorderseite 14 her zugänglich sind. Vor dem Regal befinden sich zwei Handverkaufstische 15,16, hinter denen jeweils ein Verkäufer oder Apotheker 17a,17b stehen kann. Für den Verkäufer sind somit die Ausgabeplätze 12,13 in gleicher Weise zugänglich wie das Verkaufsregal 11. Dem Kunden wird die entsprechende Ware auf dem Handverkaufstisch übergeben, auf dem auch die Kasse steht.

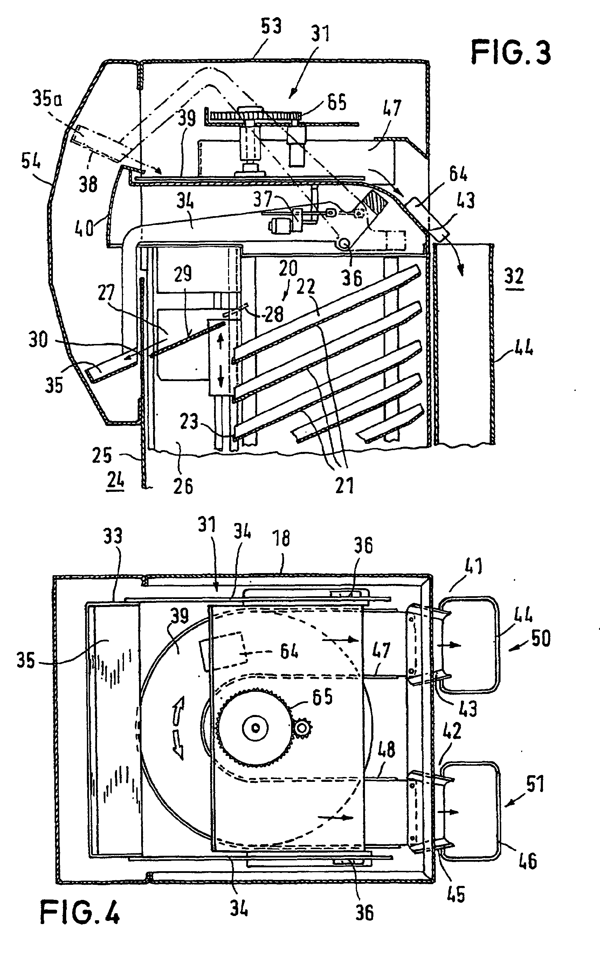

Der Ausgabeautomat 10 enthält in einem Gehäuse 18 ein Regal 20, bei dem es sich hier um ein Schrägfachbodenregal handelt. Die Schrägfachböden 21 sind im eingeschobenen Zustand unter einem Winkel geneigt, der so groß ist, daß die auf den Schrägfachböden 21 abgelegten Gegenstände aufgrund ihres Gewichts gegen ein am unteren Ende des Schrägfachbodens vorgesehenes Anschlagelement 23 stoßen (Figur 3). Die Schrägfachböden 21 erstrecken sich im wesentlichen über die gesamte Breite des Gehäuses 18 und sie sind an den Seiten in Führungsschienen 22 geführt. Jeder Schrägfachboden 21 kann zur Entnahmeseite 24 hin zum Befüllen herausgezogen werden. Zur Entnahmeseite ist das Gehäuse 18 durch eine Tür 25 verschlossen, die aufgeklappt werden kann. Zwischen dem Regal 20 und der Tür 25 befindet sich ein Freiraum 26, in dem ein Manipulator 27 entlang einer durch zwei Koordinaten definierten vertikalen Ebene gesteuert verfahrbar ist. Der Manipulator 27 kann somit in vertikaler Richtung und horizontal parallel zu dem Regal 20 verfahren werden, um jeweils einen Schrägfachboden 21 und innerhalb des Schrägfachbodens eine bestimmte Horizontalposition anzusteuern. Auf diese Weise wird die zu entnehmende Ware selektiert. Der Manipulator 27 besitzt einen Finger 28 (Figur 3), der ausfahrbar ist, um durch einen Schlitz des Schrägfachbodens 21 hindurch unter den auf dem Schrägfachboden liegenden untersten Gegenstand zu untergreifen und ihn über das Anschlagelement 23 anzuheben. Dann gleitet der Gegenstand auf dem Finger 28 über das Anschlagelement 23 hinweg auf eine Tragfläche 29 des Manipulators 27.

In der Tür 25 befindet sich eine Auslaßöffnung 30. Wenn der Manipulator 27 die Auslaßöffnung 30 erreicht hat, gleitet der auf der Tragfläche 29 liegende Gegenstand, der zuvor von der Tür 25 abgestützt worden ist, durch die Auslaßöffnung 30 hindurch aus dem Gehäuse heraus. Auf diese Weise kann jedem beliebigen Schrägfachboden 21 ein Gegenstand entnommen werden, der dann von dem Manipulator 27 zur Auslaßöffnung 3C transportiert und von dieser aus dem Gehäuse ausgegeben wird.

Über dem Regal 20 und dem Freiraum 26 befindet sich die Umsetzvorrichtung 31. Diese dient dazu, die Gegenstände, die die Auslaßöffnung 30 verlassen, in Empfang zu nehmen und sie zur Abgabeseite 32 zu transportieren. Die Abgabeseite 32 ist diejenige Seite, die der Entnahmeseite 24 gegenüberliegt.

Die Umsetzvorrichtung 31 weist eine Hubvorrichtung 33 mit zwei winkelförmigen parallelen Schwenkarmen 34 und einer die Schwenkarme verbindenden Schaufel 35 auf. Die Schaufel 35 ist zwischen einer abgesenkten Position, die in Figur 3 in durchgezogenen Linien dargestellt ist, und einer Hubposition 35a schwenkbar. In der abgesenkten Position befindet sich die Schaufel 35 außen vor der Auslaßöffnung 30, so daß ein Gegenstand, der die Auslaßöffnung passiert, von der Schaufel 35 aufgefangen wird. Die Schwenkarme 34 werden von einem Schwenkantrieb 37 gesteuert um eine über dem Regal 20 angeordnete horizontale Schwenkachse 36 verschwenkt. Im hochgeschwenkten Zustand hat der Boden 38 der Schaufel 35 Gefälle zum Regal 20 hin. Dies bedeutet, daß ein Gegenstand, der auf dem Boden 38 liegt, auf einen über dem Regal angeordneten Drehteller 39 fällt. Eine Leitwand 40 verhindert, daß der Gegenstand zu früh aus der Schaufel herabfällt. Der Drehteller 39 wird von einem Drehantrieb 65 gesteuert entweder in der einen oder in der anderen Drehrichtung gedreht. Ein Gegenstand 64, der auf dem Drehteller 39 liegt, wird entweder zu der Abgabestelle 41 oder zu der Abgabestelle 42 transportiert. An der Abgabestelle 41 befindet sich eine Rutsche 43, die den Gegenstand in ein Rohr 44 leitet. An der Abgabestelle 42 befindet sich eine Rutsche 45, die den Gegenstand in ein Rohr 46 leitet. Leitbleche 47 und 48, die über dem Drehteller 39 angeordnet sind, verhindern, daß der Gegenstand auf dem Drehteller 39 liegenbleibt. Der Drehteller 39 bildet eine Selektionsvorrichtung, mit welcher eine von zwei Abgabestellen 41,42 auswählbar ist.

Die Rohre 44,46 sind jeweils Bestandteil einer Transportvorrichtung 50 bzw. 51, die auf der Abgabeseite 32 angeordnet ist, welche der Entnahmeseite 24 gegenüberliegt.

Die Umsetzvorrichtung 31 ist in einem eigenen Gehäuse 53 unmittelbar über dem Regal 20 und dem Freiraum 26 enthalten. An der Tür 25 ist eine Haube 54 befestigt, welche den zur Entnahmeseite 24 vorstehenden Teil der Hubvorrichtung 33 bedeckt und gleichzeitig die Auslaßöffnung 30 verdeckt.

Die Rohre 44 und 46 dienen dazu, einen Gegenstand, der von der Umsetzvorrichtung 31 auf die Abgabeseite 32 umgesetzt wurde, dem jeweiligen Ausgabeplatz 13 bzw. 12 zuzuführen. Jedes der Rohre ist zu einem Viertelkreis gebogen, wobei der obere Rohrabschnitt senkrecht verläuft, während der untere Rohrabschnitt horizontal in den Ausgabeplatz mündet. Auf diese Weise wird erreicht, daß die Gegenstände sanft und ohne Aufprall in den Ausgabeplatz gelangen.

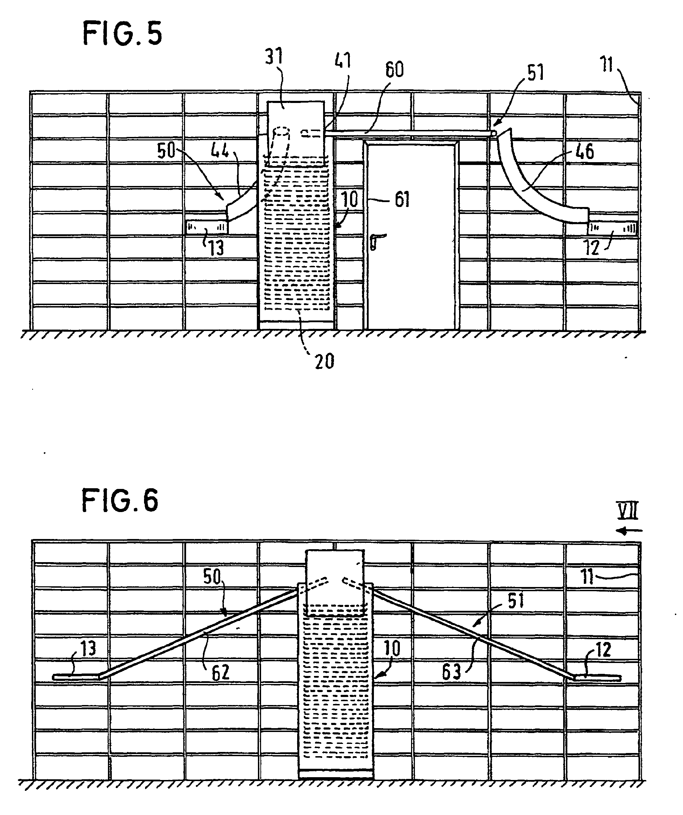

Bei dem Ausführungsbeispiel von Fig. 5 ist der Ausgabeautomat 10 generell in gleicher Weise ausgebildet wie bei dem ersten Ausführungsbeispiel und die Transportvorrichtung 50 entspricht ebenfalls derjenigen des ersten Ausführungsbeispiels. Unterschiedlich ist die andere Transportvorrichtung 51, die hier aus einem Horizontalförderer 60 und dem daran angeschlossenen Viertelkreisrohr 46 besteht. Der Förderer 60 wird gesteuert angetrieben, wenn ein Gegenstand die Abgabestelle 41 erreicht hat. Der Förderer 60 verläuft horizontal und zwar auf der Höhe der Abgabestelle 41. Diese Höhe ist übermannsgroß, d.h. höher als 1,80 m, so daß Türen oder andere Durchlässe 61 überquert werden können. Es ist auch möglich, anstelle des Förderers 60 eine Rutsche zu verwenden, wenn eine noch größere Regalhöhe zur Verfügung steht.

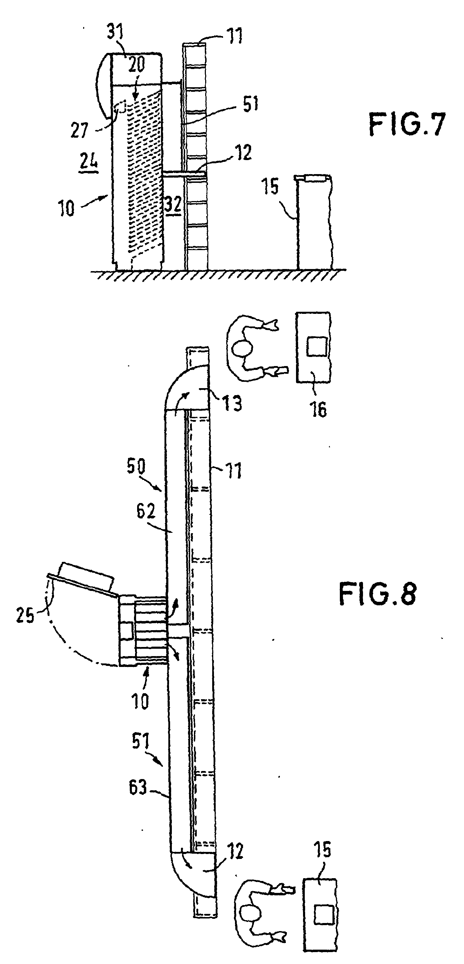

Bei dem Ausführungsbeispiel der Figuren 6 bis 8 bestehen die Transportvorrichtungen 50,51 jeweils aus einer langgestreckten schrägen Rutsche 62 bzw. 63, die hier geradlinig ausgebildet ist und keine Abdeckung aufweist. Man erkennt, daß mit der großen Abgabehöhe am Regal relativ lange Entfernungen überbrückt werden können, so daß weit entfernt liegende Ausgabeplätze 12,13 bedient werden können.

Die Bedienung des Ausgabeautomaten erfolgt in der Weise, daß der Verkäufer in eine Eingabeeinrichtung, die vorzugsweise auf dem Handverkaufstisch steht oder in diesen integriert ist, eine Kennzeichnung des auszugebenden Gegenstandes eingibt. Diese Eingabeeinrichtung steuert den Ausgabeautomaten 10 in der Weise, daß der Manipulator den betreffenden Gegenstand aus dem Regal 20 entnimmt und ihn der Umsetzvorrichtung 31 zuführt. Die Umsetzvorrichtung verbringt den Gegenstand von der Entnahmeseite 24 auf die Abgabeseite 32 und übergibt ihn dort der Transportvorrichtung 50 oder der Transportvorrichtung 51, in Abhängigkeit davon, an welchen Ausgabeplatz 12,13 die Ausgabe erfolgen soll.

Bei den dargestellten Ausführungsbeispielen ist der Ausgabeautomat 10 auf der Rückseite des Verkaufsregals 11 angeordnet, und zwar so, daß die Abgabeseite 32 Rücken an Rücken mit der Rückwand des Verkaufsregals 11 steht und dazwischen die Transportvorrichtung angeordnet ist. Es ist auch möglich, die Transportvorrichtungen 50,51 an den Seitenwänden des Verkaufsautomaten angreifen zu lassen. In diesem Fall könnte der Verkaufsautomat direkt mit dem Rücken gegen den Regalrücken gestellt werden und die Abgabeseite des Ausgabeautomaten würde sich an den rechtwinklig hierzu verlaufenden Seitenwänden befinden.

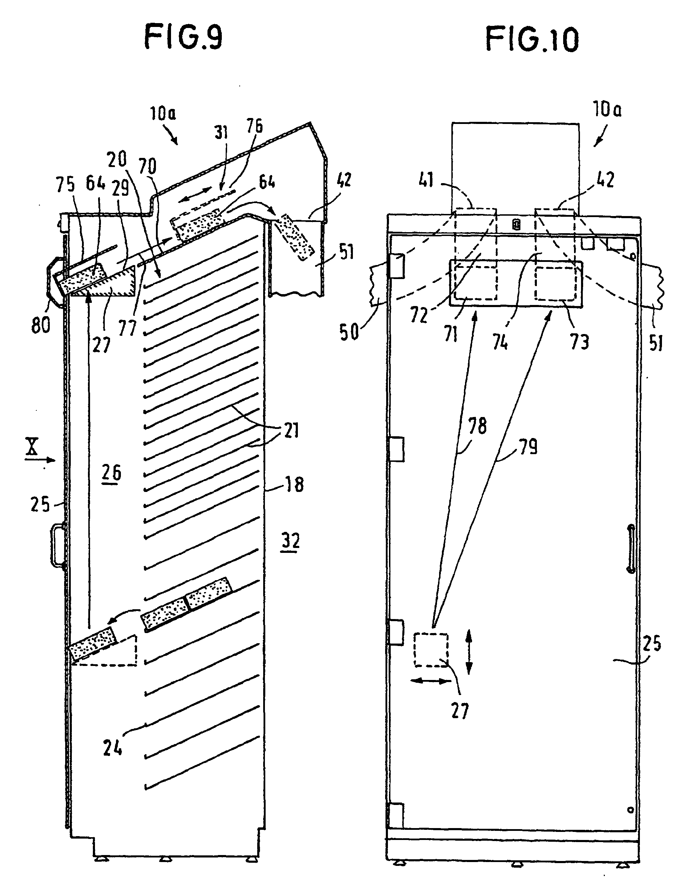

Bei dem Ausführungsbeispiel der Fign. 9 und 10 ist der Ausgabeautomat 10a ebenfalls mit einem Regal 20 versehen, das in einem Gehäuse 18 angeordnet ist und das als Schrägfachbodenregal mit Schrägfachböden 21 ausgestattet ist. Die Schrägfachböden 21 fallen zur Entnahmeseite 24 hin ab und dort befindet sich der Freiraum 26, in dem der Manipulator 27 gesteuert verfahrbar ist. Der Freiraum 26 ist nach außen durch eine zu öffnende Tür 25 abgeschlossen, die vorzugsweise als Glastür ausgebildet ist.

Ober dem Regal 20 befindet sich eine Schrägfläche 70. Wenn der Manipulator 27 sich in der obersten Position befindet, kann ein Gegenstand von der Tragfläche 29 des Manipulators 27 auf die Schrägfläche 70 überführt werden. Der Manipulator 27 kann in der höchsten Position wahlweise eine von zwei Übergabepositionen 71,73 (Fig. 10) anfahren, die horizontal nebeneinander angeordnet sind. Von jeder Übernahmeposition 71,73 erstreckt sich eine Gleitbahn 72 bzw. 74 entlang der Schrägfläche 70 nach oben. Entlang jeder Gleitbahn 72,74 ist ein Schieber 75 bzw. 76 verschiebbar. Der Schieber 75 ist der Übernahmeposition 73 zugeordnet und der Schieber 76 ist der Übernahmeposition 71 zugeordnet. Der Schieber 75 ist in Fig. 9 in der Endposition gezeigt. Der Manipulator 27 wird mit dem darauf befindlichen Gegenstand 64 unter den Schieber 75 gefahren, so wie dies in Fig. 9 dargestellt ist. Wird nun der Schieber 75 entlang des Pfeiles 77 bewegt, nimmt er den Gegenstand 64 mit und befördert ihn auf der Schrägfläche 70 nach oben, bis der Gegenstand an die zugehörige Transportvorrichtung 50 bzw. 51 übergeben wird. Bei der Darstellung in Fig. 9 empfängt soeben der Schieber 75 einen neuen Gegenstand 64, während der Schieber 76 einen Gegenstand 64 zu der betreffenden Transportvorrichtung 50 bzw. 51 transportiert.

Die Selektionsvorrichtung, die den Gegenstand an die Übernahmeposition 71 oder die Übernahmeposition 73 transportiert, ist in die Steuerung des Manipulators 27 implementiert. In Abhängigkeit davon, welchem Ausgabeplatz 12,13 bzw. welchem Zielbereich der Gegenstand zugeführt werden soll, wird der Manipulator 27 derart gesteuert, dass er entweder die Übernahmeposition 71 oder die Übernahmeposition 73 ansteuert. Dies ist in Fig. 10 durch die Pfeile 78 und 79 angedeutet. Der Manipulator 27 führt diese Querbewegung zur Ansteuerung der Übernahmeposition synchron mit der Vertikalbewegung zum Anheben in die oberste Endstellung aus, und zwar beginnend von derjenigen Position, in der er die Gegenstände von dem jeweiligen Schrägfachboden übernommen hat. Bereits mit der Ansteuerung der Obernahmeposition wird also der Zielort oder Zielbereich festgelegt. Die Umsetzvorrichtung 31 besteht im vorliegenden Fall aus der Schrägfläche 70 und den Schiebern 75,76. An den Übernahmepositionen 71 und 73 sind in der Tür Ausbauchungen 80 vorhanden, damit der in der Wartestellung befindliche Schieber 75 Platz findet, um den von unten kommenden Manipulator 27 mit dem daraufliegenden und an der Tür 25 abgestützten Gegenstand 64 zu empfangen. Die Schieber 75,76 werden von einem Antrieb synchron bewegt.

## Patentansprüche

1. Ausgabeautomat mit einem Regal (20) mit übereinander angeordneten Schrägfachböden (21), einem Manipulator (27), der auf einer Entnahmeseite (24) des Regals (20) verfahrbar ist, um Gegenstände aus dem Regal zu entnehmen, und einer Transportvorrichtung (50,51) zum Transportieren von durch den Manipulator aus dem Regal (20) entnommenen Gegenständen von dem Regal zu einem entfernt von dem Regal angeordneten Ausgabeplatz (12,13),
**dadurch gekennzeichnet,**
**daß** die Transportvorrichtung (50,51) an eine von der Entnahmeseite (24) verschiedene Abgabeseite (32) angrenzt und daß im Transportweg zwischen dem Manipulator und der Transportvorrichtung eine Umsetzvorrichtung (31) vorgesehen ist, die die von dem Manipulator aus dem Regal entnommenen Gegenstände von der Entnahmeseite (24) auf die Abgabeseite (32) des Regals transferiert.

2. Ausgabeautomat nach dem Oberbegriff von Anspruch 1, **dadurch gekennzeichnet, daß** die Abgabe der Gegenstände an die Transportvorrichtung (50,51) auf einer übermannsgroßen Höhe von über 1,80 m vorgesehen ist und daß die Transportvorrichtung (50,51) eine Gleitbahn aufweist.

3. Ausgabeautomat nach Anspruch 1 oder 2, **dadurch gekennzeichnet, daß** eine Selektionsvorrichtung vorgesehen ist, durch welche eine von mehreren Abgabestellen (41,42), die unterschiedlichen Zielbereichen (12,13) zugeordnet sind, auswählbar ist.

4. Ausgabeautomat nach Anspruch 3, **dadurch gekennzeichnet, daß** die Selektionsvorrichtung in der Steuerung des Manipulators (27) enthalten ist, derart, daß der Manipulator (27) in Abhängigkeit von dem ausgewählten Zielbereich (12,13) unterschiedliche Übernahmepositionen (71,73) anfährt.

5. Ausgabeautomat nach Anspruch 1 oder 2, **dadurch gekennzeichnet, daß** die Umsetzvorrichtung (31) einen über dem Regal (20) angeordneten Drehteller (39) und eine die Gegenstände auf den Drehteller befördernde Hubvorrichtung (33) aufweist.

6. Ausgabeautomat nach Anspruch 5, **dadurch gekennzeichnet, daß** die Hubvorrichtung (33) eine an einem Schwenkarm (34) befestigte Schaufel (35) aufweist, deren Boden (38) bei hochgeklapptem Schwenkarm (34) Gefälle zum Drehteller (39) hat.

7. Ausgabeautomat nach Anspruch 5 oder 6, **dadurch gekennzeichnet, daß** der Drehteller (39) zwei entgegengesetzte Drehrichtungen hat und zwei Abgabestellen (41,42), von denen jede einer anderen Drehrichtung zugeordnet ist, aufweist, wobei sich an die Abgabestellen jeweils eine andere Transportvorrichtung (50,51) anschließt.

8. Ausgabeautomat nach einem der Ansprüche 1-7, **dadurch gekennzeichnet, daß** die Transportvorrichtung (50,51) mindestens ein Rohr (44,46) aufweist.

9. Ausgabeautomat nach Anspruch 8, **dadurch gekennzeichnet, daß** das Rohr (44,46) eine Biegung von etwa 90° aufweist, wobei der obere Rohrabschnitt vertikal und der untere Rohrabschnitt horizontal verläuft.

10. Ausgabeautomat nach einem der Ansprüche 1-9, **dadurch gekennzeichnet, daß** das Regal (20) mit seiner Abgabeseite einer Wand oder der Rückwand eines Verkaufsregals (11) zugewandt ist.

11. Ausgabeautomat nach einem der Ansprüche 1-10, **dadurch gekennzeichnet, daß** die Abgabeseite (32) entgegengesetzt zur Entnahmeseite (24) angeordnet ist.

12. Ausgabeautomat nach Anspruch 1, **dadurch gekennzeichnet, daß** die Umsetzvorrichtung (31) oben auf dem Regal (20) angeordnet ist.

## Claims

1. A dispensing machine comprising a shelving (20) with superposed inclined shelf trays (21), a manipulator (27) adapted to be displaced on a take-out side (24) of the shelving (20) to take articles from the shelving, and a transport device (50, 51) for transporting articles taken out of the shelving (20) by the manipulator from the shelving to a dispensing site (12, 13) remote from the shelving,
**characterized in that**
the transport device (50, 51) adjoins a dispensing side (32) other than the take-out side (24) and that a transfer device (31) is provided in the transport path between the manipulator and the transport device, which transfer device transfers the articles taken out from the shelving by the manipulator from the take-out side (24) to the dispensing side (32) of the shelving.

2. The dispensing machine of claim 1, **characterized in that** the articles are dispensed to the transport device (50, 51) on a more than man-high level of more than 1.80 m and that the transport device (50, 51) comprises a slideway.

3. The dispensing machine of claim 1 or 2, **characterized in that** a selecting device is provided for selecting one of a plurality of dispensing sites (41, 42) that are associated to different target areas (12, 13).

4. The dispensing machine of claim 3, **characterized in that** the selecting device is included in the control of the manipulator (27) such that the manipulator (27) travels to different take-over positions (71, 73) depending on the target area (12, 13) selected.

5. The dispensing machine of claim 1 or 2, **characterized in that** the transfer device (31) comprises a turntable (39) arranged above the shelving (20) and a lifting device (33) moving the articles onto the turntable.

6. The dispensing machine of claim 5, **characterized in that** the lifting device (33) comprises a shovel (35) fastened to a pivot arm (34), the bottom (38) of the shovel being inclined towards the turntable (39) when the pivot arm (34) is in its upper position.

7. The dispensing machine of claim 5 or 6, **characterized in that** the turntable (39) has two opposite senses of rotation and two dispensing sites (41, 42), each of which being associated to another sense of rotation, a different transport device (50, 51) respectively adjoining each dispensing site.

8. The dispensing machine of one of claims 1-7, **characterized in that** the transport device (50, 51) comprises at least one tube (44, 46).

9. The dispensing machine of claim 8, **characterized in that** the tube (44, 46) has a bend of about 90°, the top tube section extending vertically and the bottom tube section extending horizontally.

10. The dispensing machine of one of claims 1-9, **characterized in that** the shelving (20) has its dispensing side facing a wall or the rear wall of a sales shelving (11).

11. The dispensing machine of one of claims 1-10, **characterized in that** the dispensing side (32) is arranged opposite the take-out side (24).

12. The dispensing machine of claim 1, **characterized in that** the transfer device (31) is arranged on top of the shelving (20).

## Revendications

1. Distributeur automatique comprenant un rayonnage (20) avec des fonds inclinés (21) superposés, un manipulateur (27) qui peut être déplacé sur un côté retrait (24) du rayonnage (20) pour retirer des objets du rayonnage, et un dispositif de transport (50, 51) pour transporter des objets retirés du rayonnage (20) par le manipulateur du rayonnage vers un point de distribution (12, 13) éloigné du rayonnage,
**caractérisé en ce que**
le dispositif de transport (50, 51) est adjacent à un côté remise (32) différent du côté retrait (24), et dans le trajet de transport entre le manipulateur et le dispositif de transport un dispositif de déplacement (31) est prévu qui transfère les objets retirés du rayonnage par le manipulateur du côté retrait (24) vers le côté remise (32) du rayonnage.

2. Distributeur automatique selon le préambule de la revendication 1, **caractérisé en ce que** la remise des objets au dispositif de transport (50, 51) est prévue à une hauteur de plus de 1,80 m, et le dispositif de transport (50, 51) présente une glissière.

3. Distributeur automatique selon la revendication 1 ou 2, **caractérisé en ce qu'**un dispositif de sélection est prévu permettant de choisir un parmi plusieurs points de remise (41, 42) qui sont associés à des zones de destination (12, 13) différentes.

4. Distributeur automatique selon la revendication 3, **caractérisé en ce que** le dispositif de sélection est contenu dans la commande du manipulateur (27) de sorte que le manipulateur se dirige vers différentes positions de transfert (71, 73) en fonction de la zone de destination (12, 13) choisie.

5. Distributeur automatique selon la revendication 1 ou 2, **caractérisé en ce que** le dispositif de déplacement (31) présente une plaque tournante (39) disposée au-dessus du rayonnage (20) et un dispositif de levage (33) véhiculant les objets sur la plaque tournante.

6. Distributeur automatique selon la revendication 5, **caractérisé en ce que** le dispositif de levage (33) présente une pelle (35) fixée à un bras pivotant (34), dont le fond (38) est incliné vers la plaque tournante (39) lorsque le bras pivotant (34) pivote vers le haut.

7. Distributeur automatique selon la revendication 5 ou 6, **caractérisé en ce que** la plaque tournante (39) a deux sens de rotation opposés et deux points de remise (41, 42) dont chacun est associé à un autre sens de rotation, respectivement un dispositif de transport (50, 51) différent étant raccordé aux points de remise.

8. Distributeur automatique selon l'une quelconque des revendications 1 à 7, **caractérisé en ce que** le dispositif de transport (50, 51) présente au moins un tube (44, 46).

9. Distributeur automatique selon la revendication 8, **caractérisé en ce que** le tube (44, 46) présente une courbure de 90° environ, le segment de tube supérieur s'étendant verticalement et le segment de tube inférieur horizontalement.

10. Distributeur automatique selon l'une quelconque des revendications 1 à 9, **caractérisé en ce que** le côté remise du rayonnage (20) est tourné vers une paroi ou la paroi arrière d'un rayonnage de vente (11).

11. Distributeur automatique selon l'une quelconque des revendications 1 à 10, **caractérisé en ce que** le côté remise (32) est disposé à l'opposé du côté retrait (24).

12. Distributeur automatique selon la revendication 1, **caractérisé en ce que** le dispositif de déplacement (31) est disposé sur le rayonnage (20).
